# EUROPEAN PATENT SPECIFICATION

(11) **EP 2 863 580 B1**
(45) Date of publication and mention of the grant of the patent: **08.11.2017**
(21) Application number: 13861520.8
(22) Date of filing: 19.08.2013
(51) Int. Cl.: H04L 12/707, H04L 12/703, H04L 12/723, H04L 12/26

(54) **1+1 END-TO-END BIDIRECTIONAL SWITCHING METHOD, SYSTEM AND NODE**
BIDIREKTIONALES 1+1-END-TO-END-SCHALTVERFAHREN SOWIE SYSTEM UND KNOTEN DAFÜR
PROCÉDÉ DE COMMUTATION BIDIRECTIONNELLE DE BOUT EN BOUT DE TYPE 1:1, SYSTÈME ET NOEUD

(43) Date of publication of application: 22.04.2015
(73) Proprietor: Huawei Technologies Co., Ltd., Longgang District Shenzhen, Guangdong 518129 (CN)
(72) Inventor: RAO, Baoquan, Shenzhen Guangdong 518129 (CN)
(74) Representative: Pfenning, Meinig & Partner mbB
(86) International application number: PCT/CN2013/081792
(87) International publication number: WO 2015/024163

(56) References cited:
- CN-A- 101 114 880
- CN-A- 102 204 190
- US-A1- 2005 013 242
- US-A1- 2012 195 190
- LANG J P ET AL: "RSVP-TE Extensions in Support of End-to-End Generalized Multi-Protocol Label Switching (GMPLS) Recovery; rfc4872.txt", 20070501, 1 May 2007 (2007-05-01), XP015052417, ISSN: 0000-0003
- JONATHAN P LANG ET AL: "Generalized Multi-Protocol Label Switching (GMPLS) Recovery Functional Specification; draft-ietf-ccamp-gmpls-recovery-functional -04.txt", 20050401, vol. ccamp, no. 4, 1 April 2005 (2005-04-01), XP015038131, ISSN: 0000-0004
- RAKESH GANDHI ZAFAR ALI GABRIELE MARIA GALIMBERTI CISCO SYSTEMS ET AL: "RSVP-TE Extensions For Signaling GMPLS Restoration LSP; draft-gandhi-ccamp-gmpls-restoration-lsp-0 0.txt", RSVP-TE EXTENSIONS FOR SIGNALING GMPLS RESTORATION LSP; DRAFT-GANDHI-CCAMP-GMPLS-RESTORATION-LSP-0 0.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 16 October 2012 (2012-10-16), pages 1-9, XP015087972, [retrieved on 2012-10-16]

## Description

### TECHNICAL FIELD

The present invention relates to the communications field, and in particular, to a 1+1 end-to-end bidirectional switching method and system, and a node.

### BACKGROUND

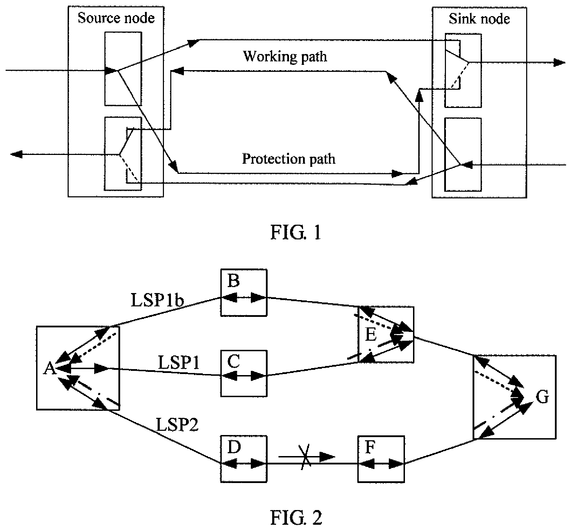

By adding a control plane, an automatic switched optical network (Automatic Switched Optical Network, ASON for short) implements diffusion of network topology information and perform various operations such as creation, deletion, modification and query of an end-to-end connection service in a traditional optical network environment. Together with a 1+1 protection function of a transport plane, the control plane can create a corresponding working path and protection path for each service, and create 1+1 protection between the working path and the protection path. As shown in FIG. 1, when a selective working path is faulty, the service is switched from the working path to the protection path, and a source node and a sink node turn a switch from a receiving direction indicated by a solid line to a receiving direction indicated by a dotted line, and create a new working path and create 1+1 protection for the new working path and the protection path.

J. P. Lang et al discuss in "RSVP-TE Extensions in Support of End-to-End Generalized Multi-Protocol Label Switching (GMPLS) Recovery" (IETF RFC 4872 of May, 2007) protocol-specific procedures and extensions for Generalized Multi-Protocol Label Switching (GMPLS) Resource ReSerVation Protocol - Traffic Engineering (RSVP-TE) signaling to protect end-to-end Label Switched Path (LSP) recovery that denotes protection and restauration. In 1+1 bidirectional protection, a protecting LSP is signaled over a dedicated resource-disjoint alternate path to protect the working LSP. Normal traffic is simultaneously sent on both LSPs (in both directions), and a selector is used at both ingress/egress nodes to receive traffic from the same LSP. This requires coordination between the end-nodes when switching to the protecting LSP.

J. P. Lang et al discuss in "Generalized Multi-Protocol Label Switching (GMPLS) Recovery Functional Specification" (IETF draft named draft-ietf-ccamp-gmpls-recovery-functional-04.txt of April, 2005) a functional description of the protocol extensions needed to support Generalized Multi-Protocol Label Switching (GMPLS)-based recovery (i.e. protection and restoration).

Rakesh Gandhi et al discuss in "RSVP-TE Extensions for Signaling GMPLS Restoration LSP" (IETF draft named draft-gandhi-ccamp-gmpls-restoration-lsp-00) RSVP-TE signaling extensions GMPLS recovery with restoration LSP.

In the prior art, when dual-ended switching is performed between a head end and a tail end of the 1+1 protection, if a cross-connect node exists in the path, a case in which selective receiving paths are inconsistent between the head end and the tail end occurs. Consequently, requirements of a network application that imposes a stringent round-trip delay requirement cannot be met, and inconvenience is brought to daily maintenance of a network.

### SUMMARY

Embodiments of the present invention provide a 1+1 end-to-end bidirectional switching method and system, and a node to resolve a problem in the prior art that selective receiving paths are inconsistent between a head end and a tail end of dual-ended switching when a cross-connect node exists on a path.

To achieve the foregoing objective, technical solutions adopted in the embodiments of the present invention are as follows:

A first aspect of the present invention provides a 1+1 end-to-end bidirectional switching method, including:
receiving, by a source node, candidate path information sent by a node that detects a fault and that is capable of performing selective receiving direction path switching, where the candidate path information includes information about at least a path different from the working path and the protection path between the source node and the node that detects the fault among paths from the source node to the fault-detected node, where the path is compliant, after the node that detects a fault performs selective receiving direction path switching, with a selective receiving direction path of the node that detects a fault;
acquiring, by the source node, a first path according to the candidate path information, and switching a service to a data channel corresponding to the first path; and
sending, by the source node, on the first path, information about the first path to a sink node, so that a node capable of 1+1 protection on the first path determines, according to the information about the first path, to switch the service to the data channel corresponding to the first path, where the first path is a path between the source node and the sink node, and the information about the first path includes information indicating that the first path is a switched path and an object in an Resource Reservation Protocol-Traffic Engineering, RSVP-TE, message indicates that the first path is a switched path.

In the first aspect, the acquiring, by the source node, a first path according to the candidate path information, includes:
using, by the source node, a candidate path in a non-working state and in a non-alarm state in the candidate path information and according to a network delay as the first path according to a working state and an alarm state of each candidate path included in the candidate path information.

A second aspect of the present invention provides a 1+1 end-to-end bidirectional switching method, including:
performing, by a node that detects a fault and that is capable of performing selective receiving direction path switching, selective receiving direction path switching, and generating candidate path information according to a selective receiving direction path, of the node that detects a fault, which is acquired after the selective receiving direction path switching, where the candidate path information includes information about at least a path different from the working path and the protection path between a source node and the node that detects the fault among paths from the source node to the node that detects a fault, where the path is compliant with the selective receiving direction path of the node that detects a fault and is selected according to a network delay;
sending, by the node that detects a fault, the candidate path information to the source node, so that the source node acquires a first path according to the candidate path information and switches a service to a data channel corresponding to the first path, wherein the acquiring, by the source node, a first path according to the candidate path information, comprises:using, by the source node, a candidate path in a non-working state and in a non-alarm state in the candidate path information as the first path according to a working state and an alarm state of each candidate path comprised in the candidate path information, and the source node sends, on the first path, information about the first path to a sink node, where the first path is a path between the source node and the sink node, and the information about the first path includes information indicating that the first path is a switched path and an object in an Resource Reservation Protocol-Traffic Engineering, RSVP-TE, message indicates that the first path is a switched path; and
determining, by the node that detects a fault, according to the received information about the first path, to switch the service to the data channel corresponding to the first path.

In a first possible implementation manner, the sending, by the node that detects a fault, the candidate path information to the source node, includes: sending, by the node that detects a fault, the candidate path information to the source node by means of routing.

A third aspect of the present invention provides a 1+1 end-to-end bidirectional switching method, including:
receiving, by an intermediate node, information about a first path, where the information about the first path is information sent, on the first path, by a source node to a sink node wherein the first path is a path in a non-working state and in a non-alarm state and the first path is acquired by the source node according to a working state and an alarm state and according to a network delay of each candidate path comprised in candidate path information, and includes information indicating that the first path is a switched path and an object in an Resource Reservation Protocol-Traffic Engineering, RSVP-TE, message indicates that the first path is a switched path, the intermediate node is a node capable of 1+1 protection on the first path, and the first path is a path between the source node and the sink node;
determining, by the intermediate node according to the information about the first path, to switch a service to the first path; and
forwarding, by the intermediate node, on the first path, the information about the first path to a downstream node, so that a downstream node capable of 1+1 protection determines, according to the information about the first path, to switch the service to a data channel corresponding to the first path.

In a first possible implementation manner, the determining, by the intermediate node according to the information about the first path, to switch a service to the first path, specifically includes:
if 1+1 protection exists on the intermediate node, determining, by the intermediate node, whether a current selective data channel is consistent with the data channel corresponding to the first path and is indicated in the information about the first path;
if consistent, determining that the intermediate node does not perform switching;
if inconsistent, switching the service to the data channel corresponding to the first path.

A fourth aspect of the present invention provides a node, including:
a receiving unit, configured to receive candidate path information sent by a node that detects a fault and that is capable of performing selective receiving direction path switching, where the candidate path information includes information about at least a path different from the working path and the protection path between the node and the node that detects the fault among paths from the node to the node that detects a fault, where the path is compliant, after the node that detects a fault performs selective receiving direction path switching, with a selective receiving direction path of the node that detects a fault;
an acquiring unit, configured to acquire a first path according to the candidate path information;
a switching unit, configured to switch a service to a data channel corresponding to the first path; and
a sending unit, configured to send, on the first path, information about the first path to a sink node, so that a node capable of 1+1 protection on the first path determines, according to the information about the first path, to switch the service to the data channel corresponding to the first path, where the first path is a path between the node and the sink node, and the information about the first path includes information indicating that the first path is a switched path and an object in an Resource Reservation Protocol-Traffic Engineering, RSVP-TE, message indicates that the first path is a switched path.

In the fourth aspect, the acquiring unit is configured to use a candidate path in a non-working state and in a non-alarm state in the candidate path information and according to a network delay as the first path according to a working state and an alarm state of each candidate path included in the candidate path information.

A fifth aspect of the present invention provides a node, including:
a switching unit, configured to perform selective receiving path switching;
a generating unit, configured to generate candidate path information according to a selective receiving direction path of the node after the selective receiving direction path switching, where the candidate path information includes information about at least a path different from the working path and the protection path among paths from a source node to the node, where the path is compliant with the selective receiving direction path of the node;
a sending unit, configured to send the candidate path information to the source node, so that the source node acquires a first path according to the candidate path information and switches a service to a data channel corresponding to the first path, wherein the acquiring, by the source node, a first path according to the candidate path information, comprises: using, by the source node, a candidate path in a non-working state and in a non-alarm state in the candidate path information and according to a network delay as the first path according to a working state and an alarm state of each candidate path comprised in the candidate path information, and the source node sends, on the first path, information about the first path to a sink node, where the first path is a path between the source node and the sink node, and the information about the first path includes information indicating that the first path is a switched path and an object in an Resource Reservation Protocol-Traffic Engineering, RSVP-TE, message indicates that the first path is a switched path; and
a receiving determining unit, configured to determine, according to the received information about the first path, to switch the service to the data channel corresponding to the first path.

In a first possible implementation manner, the sending unit is configured to send the candidate path information to the source node by means of routing.

A sixth aspect of the present invention provides a node, including:
a receiving unit, configured to receive information about a first path, where the information about the first path is information sent, on a first path, by a source node to a sink node wherein the first path is a path in a non-working state and in a non-alarm state and the first path is acquired by the source node according to a working state and an alarm state and according to a network delay of each candidate path comprised in candidate path information, and includes information indicating that the first path is a switched path and an object in an Resource Reservation Protocol-Traffic Engineering, RSVP-TE, message indicates that the first path is a switched path, the node is a node capable of 1+1 protection on the first path, and the first path is a path between the source node and the sink node;
a determining unit, configured to determine, according to the information about the first path, to switch a service to the first path; and
a sending unit, configured to forward, on the first path, the information about the first path to a downstream node, so that a downstream node capable of 1+1 protection determines, according to the information about the first path, to switch the service to a data channel corresponding to the first path.

In a first possible implementation manner, the determining unit is specifically configured to:
if 1+1 protection exists on the node, determine whether a current selective data channel is consistent with the data channel corresponding to the first path and is indicated in the information about the first path;
if yes, determine that the node does not perform switching;
if no, switch the service to the data channel corresponding to the first path.

A seventh aspect of the present invention provides a 1+1 end-to-end bidirectional switching system, where the system includes the source node described in any implementation manner of the fourth aspect, the node that detects a fault and is described in any implementation manner of the fifth aspect, and at least one intermediate node described in any implementation manner of the sixth aspect.

In the 1+1 end-to-end bidirectional switching method and system, and the node according to the embodiments of the present invention, a bidirectional switching function is implemented in a case in which a fault occurs and it is ensured that selective receiving paths are the same between a head end and a tail end, and therefore, requirements of a network application that imposes a stringent round-trip delay requirement are met and convenience is provided for daily maintenance of a network.

### BRIEF DESCRIPTION OF DRAWINGS

To describe the technical solutions in the embodiments of the present invention or in the prior art more clearly, the following briefly introduces accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of 1+1 protection in an ASON network in the prior art;
FIG. 2 is a schematic diagram of an ASON network serving as an application scenario according to an embodiment of the present invention;
FIG. 3 is a schematic diagram of a 1+1 end-to-end bidirectional switching method according to an embodiment of the present invention;
FIG. 4 is a schematic diagram of another 1+1 end-to-end bidirectional switching method according to an embodiment of the present invention;
FIG. 5 is a schematic diagram of still another 1+1 end-to-end bidirectional switching method according to an embodiment of the present invention;
FIG. 6 is a flowchart of a specific implementation manner of a 1+1 end-to-end bidirectional switching method according to an embodiment of the present invention;
FIG. 7 is a diagram of an RSVP-TE message format according to an embodiment of the present invention;
FIG. 8 is a flowchart of sending information about a first path by an intermediate node according to an embodiment of the present invention;
FIG. 9 is a schematic apparatus diagram of a node according to an embodiment of the present invention;
FIG. 10 is a schematic apparatus diagram of another node according to an embodiment of the present invention;
FIG. 11 is a schematic apparatus diagram of still another node according to an embodiment of the present invention;
FIG. 12 is a hardware structure diagram of a node according to an embodiment of the present invention;
FIG. 13 is a hardware structure diagram of another node according to an embodiment of the present invention;
FIG. 14 is a hardware structure diagram of still another node according to an embodiment of the present invention; and
FIG. 15 is a schematic diagram of a 1+1 end-to-end bidirectional switching system according to an embodiment of the present invention.

### DESCRIPTION OF EMBODIMENTS

The following clearly and completely describes the technical solutions in the embodiments of the present invention with reference to accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The embodiments of the present invention are applicable to an ASON network in which 1+1 protection is established. A transmission pipeline of the ASON network may be a virtual container (Virtual Container, VC for short) compliant with a synchronous digital hierarchy (Synchronous Digital Hierarchy, SDH for short), including VC12/VC3/VC4; or may be an optical channel data unit (Optical Channel Data Unit, ODU for short) compliant with an optical transport network (Optical Transport Network, OTN for short) system, including ODU0/1/2/3/4/2e/flex. The ASON provides 1+1 protection for each transmission pipeline correspondingly.

Exemplarily, to describe the solutions clearly and briefly, all embodiments of the present invention use an ASON network shown in FIG. 2 as an application scenario, which, however, does not mean that the embodiments of the present invention are applicable only to this scenario. In the ASON network shown in FIG. 2, a source node is A, a node that detects a fault is G, a sink node may be G or a certain downstream node of G, which is not specifically limited; and nodes B, C, D, E, and F between the source node A and the node G that detects a fault are intermediate nodes. A transmission pipeline between the nodes may be VC12/3/4 or may be ODU0/1/2/3/4/2e/flex, and the ASON network provides 1+1 protection for the transmission pipeline between the source node A and the sink node.

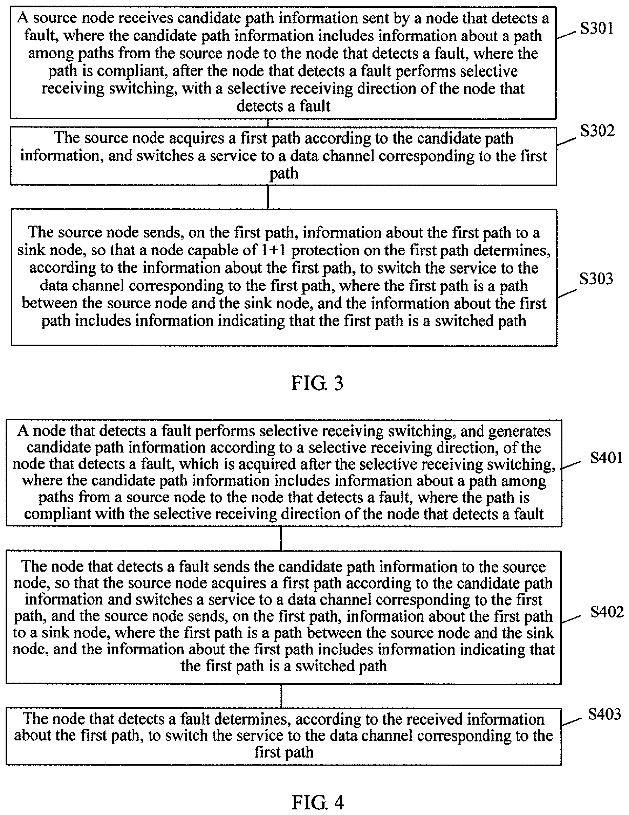

Referring to FIG. 3, FIG. 3 shows a 1+1 end-to-end bidirectional switching method in an ASON network according to an embodiment of the present invention. The method includes the following steps:
S301. A source node receives candidate path information sent by a node that detects a fault, where the candidate path information includes information about a path among paths from the source node to the node that detects a fault, where the path is compliant, after the node that detects a fault performs selective receiving switching, with a selective receiving direction of the node that detects a fault.
S302. The source node acquires a first path according to the candidate path information, and switches a service to a data channel corresponding to the first path.

Exemplarily, the acquiring, by the source node, a first path according to the candidate path information, includes: using, by the source node, a candidate path in a non-working state and in a non-alarm state in the candidate path information as the first path according to a working state and an alarm state of each candidate path included in the candidate path information.

S303. The source node sends, on the first path, information about the first path to a sink node, so that a node capable of 1+1 protection on the first path determines, according to the information about the first path, to switch the service to the data channel corresponding to the first path, where the first path is a path between the source node and the sink node, and the information about the first path includes information indicating that the first path is a switched path.

Exemplarily, in the information about the first path, an object in a Resource Reservation Protocol-Traffic Engineering (Resource Reservation Protocol-Traffic Engineering, RSVP-TE for short) message may be reused or extended to indicate that the first path is a switched path.

In the 1+1 end-to-end bidirectional switching method provided in this embodiment, a bidirectional switching function is implemented when a path is faulty, and it is ensured that selective receiving paths are the same between a head end and a tail end, and therefore, requirements of a network application that imposes a stringent round-trip delay requirement are met and convenience is provided for daily maintenance of a network.

Referring to FIG. 4, FIG. 4 shows another 1+1 end-to-end bidirectional switching method according to an embodiment of the present invention. The method includes the following steps:
S401. A node that detects a fault performs selective receiving switching, and generates candidate path information according to a selective receiving direction, of the node that detects a fault, which is acquired after the selective receiving switching, where the candidate path information includes information about a path among paths from a source node to the node that detects a fault, where the path is compliant with the selective receiving direction of the node that detects a fault.

Exemplarily, in the candidate path information, an object in an RSVP-TE message is extended to indicate the candidate path information.

S402. The node that detects a fault sends the candidate path information to the source node, so that the source node acquires a first path according to the candidate path information and switches a service to a data channel corresponding to the first path, and the source node sends, on the first path, information about the first path to a sink node, where the first path is a path between the source node and the sink node, and the information about the first path includes information indicating that the first path is a switched path.

Exemplarily, the sending, by the node that detects a fault, the candidate path information to the source node, specifically includes: sending, by the node that detects a fault, the candidate path information to the source node by means of routing.

S403. The node that detects a fault determines, according to the received information about the first path, to switch the service to the data channel corresponding to the first path.

In the 1+1 end-to-end bidirectional switching method provided in this embodiment, a bidirectional switching function is implemented when a path is faulty, and it is ensured that selective receiving paths are the same between a head end and a tail end, and therefore, requirements of a network application that imposes a stringent round-trip delay requirement are met and convenience is provided for daily maintenance of a network.

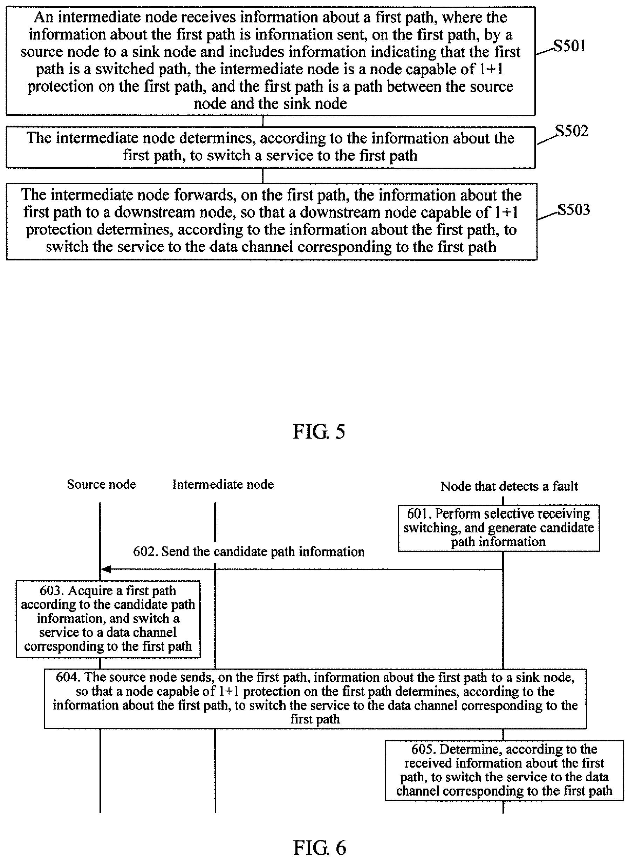

Referring to FIG. 5, FIG. 5 shows still another 1+1 end-to-end bidirectional switching method according to an embodiment of the present invention. The method includes the following steps:
S501. An intermediate node receives information about a first path, where the information about the first path is information sent, on the first path, by a source node to a sink node and includes information indicating that the first path is a switched path, the intermediate node is a node capable of 1+1 protection on the first path, and the first path is a path between the source node and the sink node.

Exemplarily, in the information about the first path, an object in an RSVP-TE message is reused to indicate that the first path is a switched path.

S502. The intermediate node determines, according to the information about the first path, to switch a service to the first path.

Exemplarily, the determining, by the intermediate node according to the information about the first path, to switch a service to the first path, specifically includes:
if 1+1 protection exists on the intermediate node, determining, by the intermediate node, whether a current selective data channel is consistent with the data channel corresponding to the first path and is indicated in the information about the first path;
if yes, determining that the intermediate node does not perform switching;
if no, switching the service to the data channel corresponding to the first path.

S503. The intermediate node forwards, on the first path, the information about the first path to a downstream node, so that a downstream node capable of 1+1 protection determines, according to the information about the first path, to switch the service to the data channel corresponding to the first path.

In the 1+1 end-to-end bidirectional switching method provided in this embodiment, a bidirectional switching function is implemented when a path is faulty, and it is ensured that selective receiving paths are the same between a head end and a tail end, and therefore, requirements of a network application that imposes a stringent round-trip delay requirement are met and convenience is provided for daily maintenance of a network.

Referring to FIG. 6, FIG. 6 shows a specific implementation manner of a 1+1 end-to-end bidirectional switching method according to an embodiment of the present invention. The method includes the following steps:
601. A node that detects a fault performs selective receiving switching, and generates candidate path information according to a selective receiving direction, of the node that detects a fault, which is acquired after the selective receiving switching, where the candidate path information includes information about a path among paths from a source node to the node that detects a fault, where the path is compliant with the selective receiving direction of the node that detects a fault.

Exemplarily, as shown in FIG. 2, in this embodiment, an ODUk (k = 0/1/2/3/4/2e/flex)/VC4 permanent 1+1 protection path is established from a source node A to a sink node, where the 1+1 protection path passes through a node G that detects a fault; a working path corresponds to a label switched path (Label Switched Path, LSP for short) 1, and its node sequence is A-C-E-G; and the protection path corresponds to LSP 2, and its node sequence is A-D-F-G, where the source node A and the sink node may be preset and determined by a user in a process of forming a network topology, and are not limited herein. When a fault occurs on the LSP 1, a new path LSP 1b is formed by means of rerouting, and its node sequence is A-B-E-G. On an E-G link, the LSP 1 and the LSP 1b share a same channel resource, and reserve the old path LSP 1. In this case, 1+1 protection is established on nodes A, E, and G. The 1+1 protection on the node A is adjusted from protection between the LSP 1 and the LSP 2 to protection between the LSP 1b and the LSP 2. Similarly, the 1+1 protection on the node A may also be adjusted from protection between the LSP 1b and the LSP 2 to protection between the LSP 1 and the LSP 2.

In this case, a selective receiving direction of each node in the figure may be set as indicated by a dashed line arrow. For example, a selective receiving direction on the source node A is a data channel corresponding to the LSP 2, a selective receiving direction on the node G that detects a fault is a data channel corresponding to the LSP 2, and a selective receiving direction on the node E is a data channel corresponding to the LSP 1.

Exemplarily, as shown in FIG. 2, in this embodiment, when a fault occurs in a direction from the node D to the node F on a selective receiving path LSP 2 of the source node A and the node G that detects a fault, for example, when a unidirectional fiber in a direction from the node D to the node F is faulty or intermittently disconnected, the node G that detects a fault detects alarm information of the path, and performs selective receiving switching on a path with optimal network quality parameters such as network delay, delay jitter, and network reliability. In this embodiment, the selective receiving path after switching is indicated by a dotted line in the figure. A cross-connect node E exists on a path in a selective receiving direction indicated by a dotted line in FIG. 2. Therefore, the node G that detects a fault generates candidate path information, where the candidate path information includes information about a path among all paths from the source node A to the node G that detects a fault, where the path is compliant, after the node G that detects a fault performs selective receiving switching, with a selective receiving direction of the node G that detects a fault. As shown in FIG. 2, the candidate path information may include information about the path LSP 1b and the path LSP 1, and their node sequences are ABEG and ACEG respectively.

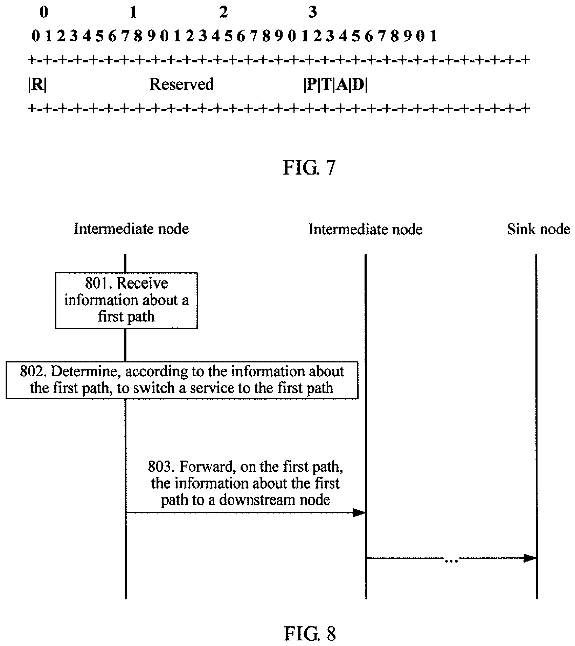

Exemplarily, in this embodiment, the node G that detects a fault may extend an object in a Resource Reservation Protocol-Traffic Engineering (Resource ReSerVation Protocol-Traffic Engineering, RSVP-TE for short) message to indicate information about all candidate paths in the candidate path information, where all the candidate paths exist between the source node and the node that detects a fault and are compliant, after the node G that detects a fault performs selective receiving switching, with the selective receiving direction of the node G that detects a fault. Specifically, the node G that detects a fault may generate a notification Notify message that includes the LSP 1b and the LSP 1, and, in the Notify message, extend an administration status <ADMIN_STATUS> object shown in FIG. 7. For example, a bit "P" is added to indicate whether a path is a candidate path. If the bit "P" is set to "1", it indicates that the path is a candidate path; if the bit "P" is set to "0", it indicates that the path is not a candidate path.

602. The node that detects a fault sends the candidate path information to the source node.

Exemplarily, in this embodiment, after the node G that detects a fault generates the candidate path information, an ASON network control plane may send the candidate path information to the source node A by means of routing, which is not limited by this embodiment of the present invention.

603. The source node acquires a first path according to the candidate path information, and switches a service to a data channel corresponding to the first path.

Exemplarily, after receiving the candidate path information sent by the node G that detects a fault, the source node A uses a candidate path in a non-working state and in a non-alarm state in the candidate path information as the first path according to a preset rule and according to a working state and an alarm state of candidate paths included in the candidate path information.

Specifically, in this embodiment, the source node A may make a selection according to current working states of the candidate paths LSP 1 and LSP 1b in the candidate path information. Because the LSP 1b is currently in a non-working path state and the LSP 1b has no alarm state, the source node A may select the LSP 1b as the first path and switch a service of the source node A to a data channel corresponding to the LSP 1b path. In addition, when the candidate path information includes multiple candidate paths that are in a non-working state and in a non-alarm state, the source node A may perform determining among the candidate paths according to a preset rule. For example, the source node A may perform the determining according to features such as network delay, delay jitter, and network reliability of the candidate paths, which is not limited in any way by this embodiment of the present invention.

604. The source node sends, on the first path, information about the first path to a sink node, so that a node capable of 1+1 protection on the first path determines, according to the information about the first path, to switch the service to the data channel corresponding to the first path.

Exemplarily, the first path is a path between the source node and the sink node, and the information about the first path includes information indicating that the first path is a switched path.

Further, for the information about the first path, the source node A may reuse an object in an RSVP-TE message to indicate that the first path is a switched path. Specifically, in this embodiment, the source node A may generate a signaling message for a selective LSP 1b, and reuse a bit "O" in a protection <PROTECTION> object in the signaling message to indicate the first path. If the bit "O" is set to "1", it indicates that the LSP path is a switched path; if the bit "O" is set to "0", it indicates that the LSP path is not a switched path.

It should be noted that, after the source node A sends, on the first path, the information about the first path to the sink node, a node capable of 1+1 protection on the first path determines, according to the information about the first path, to switch the service to the data channel corresponding to the first path, and sends the information about the first path to a downstream node according to the first path until the information about the first path is sent to the sink node. A specific process is shown in FIG. 8.

801. An intermediate node receives the information about a first path.

Exemplarily, the intermediate node may receive the information about a first path sent by the source node A, or receive the information about a first path sent by another intermediate node.

Specifically, if the intermediate node is next to the source node A on the first path, for example, an intermediate node B is next to the source node A on the first path, then the intermediate node B receives the information about the first path sent by the source node A.

If the intermediate node is next to another intermediate node on the first path, for example, an intermediate node E is next to the intermediate node B on the first path, then the intermediate node E receives the information about the first path sent by the intermediate node B.

802. The intermediate node determines, according to the information about the first path, to switch a service to the first path.

Exemplarily, the determining, by the intermediate node according to the information about the first path, to switch a service to the first path, may specifically include:
if 1+1 protection exists on the intermediate node, determining, by the intermediate node, whether a current selective data channel is consistent with the data channel corresponding to the first path and is indicated in the information about the first path;
if consistent, determining that the intermediate node does not perform switching;
if inconsistent, switching the service to the data channel corresponding to the first path.

Specifically, in this embodiment, the intermediate node B is not a cross-connect node in a topology of an entire network, and therefore, no 1+1 protection exists on the intermediate node B, and the intermediate node B terminates the switching process directly. A specific process is not repeated herein any further.

The intermediate node E is a cross-connect node in the topology of the entire network, and therefore, 1+1 protection exists on the intermediate node E. In addition, a current selective receiving path of the intermediate node E is indicated by a dashed line arrow in FIG. 2, and corresponds to a data channel corresponding to the path LSP 1, which is inconsistent with the data channel corresponding to the first path LSP 1b in the information about the first path. Therefore, the intermediate node E needs to perform switching to the data channel corresponding to the path LSP 1b, as indicated by a dotted line arrow in FIG. 2.

803. The intermediate node forwards, on the first path, the information about the first path to a downstream node, so that a downstream node capable of 1+1 protection determines, according to the information about the first path, to switch the service to the data channel corresponding to the first path.

Exemplarily, after switching of each intermediate node is complete, the intermediate node sends the information about the first path to its downstream node according to the first path, so that the downstream node repeats step 802 until the information about the first path is sent to the sink node.

605. The node that detects a fault determines, according to the received information about the first path, to switch the service to the data channel corresponding to the first path.

Exemplarily, in this embodiment, after receiving the information about the first path, the node G that detects a fault determines to switch the service to the data channel corresponding to the first path in the information about the first path, and therefore, confirms that the switching is consistent with the switching direction of the source node, and then continues to send the information about the first path to a downstream node of G until the information about the first path arrives at the sink node, thereby implementing end-to-end switching direction consistency.

In the ASON end-to-end bidirectional switching method provided in this embodiment, a bidirectional switching function is implemented when a path is faulty, and it is ensured that selective receiving paths are the same between a head end and a tail end, and therefore, requirements of a network application that imposes a stringent round-trip delay requirement are met and convenience is provided for daily maintenance of a network.

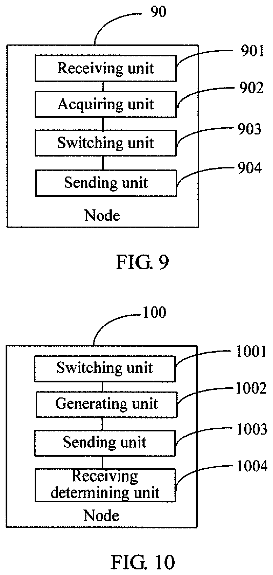

Referring to FIG. 9, FIG. 9 shows a node 90 according to an embodiment of the present invention. The node 90 may be a source node A shown in FIG. 2, including:
a receiving unit 901, configured to receive candidate path information sent by a node that detects a fault, where the candidate path information includes information about a path among paths from the local node to the node that detects a fault, where the path is compliant, after the node that detects a fault performs selective receiving switching, with a selective receiving direction of the node that detects a fault;
an acquiring unit 902, configured to acquire a first path according to the candidate path information;
a switching unit 903, configured to switch a service to a data channel corresponding to the first path; and
a sending unit 904, configured to send, on the first path, information about the first path to a sink node, so that a node capable of 1+1 protection on the first path determines, according to the information about the first path, to switch the service to the data channel corresponding to the first path, where the first path is a path between the local node and the sink node, and the information about the first path includes information indicating that the first path is a switched path.

Preferably, as shown in FIG. 2, in this embodiment, the acquiring unit 902 may use a candidate path in a non-working state and in a non-alarm state in the candidate path information as the first path according to a preset rule and according to a working state and an alarm state of candidate paths included in the candidate path information.

Specifically, as shown in FIG. 2, the candidate path information may include candidate paths LSP 1 and LSP 1b, and the acquiring unit 902 may make a selection according to current working states of the candidate paths LSP 1 and LSP 1b in the candidate path information. Because the LSP 1b is currently in a non-working path state and the LSP 1b has no alarm state, the acquiring unit 902 may select the LSP 1b as the first path and switch the selective receiving path of the node 90 to the LSP 1b path. In addition, when the candidate path information includes multiple candidate paths that are in a non-working state and in a non-alarm state, the acquiring unit 902 may perform determining according to other states of the candidate paths according to the preset rule. For example, the acquiring unit 902 may perform the determining according to features such as network delay, delay jitter, and network reliability of the candidate paths, which is not limited in any way by this embodiment of the present invention.

Preferably, in this embodiment, for the information about the first path, the node 90 may reuse or extend an object in an RSVP-TE message to indicate that the first path is a switched path. Specifically, in this embodiment, the node 90 may generate a signaling message for a selective LSP 1b, and reuse a bit "O" in a protection <PROTECTION> object in the signaling message to indicate the first path. If the bit "O" is set to "1", it indicates that the LSP path is a switched path; if the bit "O" is set to "0", it indicates that the LSP path is not a switched path.

In the node 90 provided in this embodiment of the present invention, a bidirectional switching function is implemented when a path is faulty, and it is ensured that selective receiving paths are the same between a head end and a tail end, and therefore, requirements of a network application that imposes a stringent round-trip delay requirement are met and convenience is provided for daily maintenance of a network.

Referring to FIG. 10, FIG. 10 shows a node 100 according to an embodiment of the present invention. The node 100 may be a node G shown in FIG. 2, including:
a switching unit 1001, configured to perform selective receiving switching;
a generating unit 1002, configured to generate candidate path information according to a selective receiving direction of the local node after the selective receiving switching, where the candidate path information includes information about a path among paths from a source node to the local node, where the path is compliant with the selective receiving direction of the local node;
a sending unit 1003, configured to send the candidate path information to the source node, so that the source node acquires a first path according to the candidate path information and switches a service to a data channel corresponding to the first path, and the source node sends, on the first path, information about the first path to a sink node, where the first path is a path between the source node and the sink node, and the information about the first path includes information indicating that the first path is a switched path; and
a receiving determining unit 1004, configured to determine, according to the received information about the first path, to switch the service to the data channel corresponding to the first path.

Exemplarily, as shown in FIG. 2, in this embodiment, when a fault occurs in a direction from the node D to the node F on a selective receiving path LSP 2 of the source node A and the node G that detects a fault, for example, when a unidirectional fiber in a direction from the node D to the node F is faulty or intermittently disconnected, the switching unit 1001 detects alarm information of the path, and performs selective receiving switching, where the selective receiving path after switching is indicated by a dotted line in the figure. A cross-connect node E exists on a path in a selective receiving direction indicated by a dotted line in FIG. 2. Therefore, the generating unit 1002 generates candidate path information, where the candidate path information includes information about a path among paths from the source node A to the node G that detects a fault, where the path is compliant, after the node that detects a fault G performs selective receiving switching, with a selective receiving direction of the node G that detects a fault. As shown in FIG. 2, the candidate path information may include information about the path LSP 1b and the path LSP 1, and their node sequences are ABEG and ACEG respectively.

Exemplarily, in this embodiment, the generating unit 1002 may extend an object in an RSVP-TE message to indicate the candidate path information. Specifically, the generating unit 1002 may generate a notification Notify message that includes the LSP 1b and the LSP 1, and, in the Notify message, extend an administration status <ADMIN_STATUS> object shown in FIG. 7. For example, a bit "P" is added to indicate whether a path is a candidate path. If the bit "P" is set to "1", it indicates that the path is a candidate path; if the bit "P" is set to "0", it indicates that the path is not a candidate path.

Exemplarily, the sending unit 1003 may send the candidate path information to the source node by means of routing. Specifically, an ASON network control plane may send the candidate path information to the source node A by means of routing, which is not limited by this embodiment of the present invention.

Exemplarily, after receiving the information about the first path, the receiving determining unit 1004 may determine, by using the first path in the information about the first path, to switch the service to the data channel corresponding to the first path.

Exemplarily, after confirmation, the node 100 continues to send the information about the first path to a downstream node until the information about the first path arrives at the sink node, thereby implementing end-to-end switching direction consistency between the source node and the sink node.

In the node 100 provided in this embodiment of the present invention, a bidirectional switching function is implemented when a path is faulty, and it is ensured that selective receiving paths are the same between a head end and a tail end, and therefore, requirements of a network application that imposes a stringent round-trip delay requirement are met and convenience is provided for daily maintenance of a network.

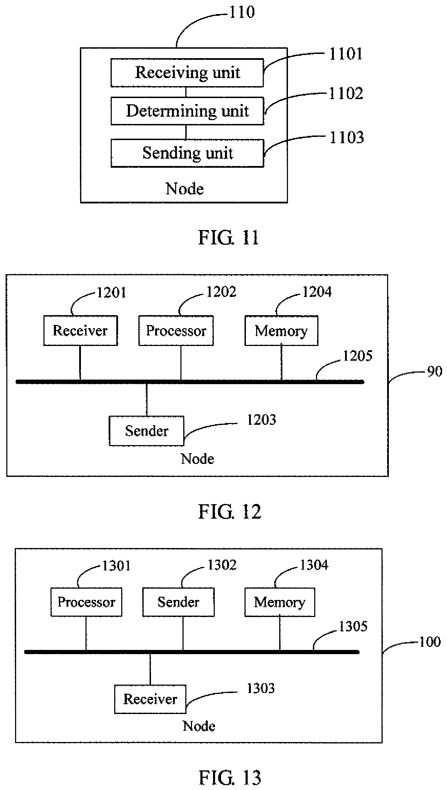

Referring to FIG. 11, FIG. 11 shows a node 110 according to an embodiment of the present invention. The node 110 may be another node except a source node A and a sink node in FIG. 2, including:
a receiving unit 1101, configured to receive information about a first path, where the information about the first path is information sent, on the first path, by the source node to the sink node and includes information indicating that the first path is a switched path, the local node is a node capable of 1+1 protection on the first path, and the first path is a path between the source node and the sink node;
a determining unit 1102, configured to determine, according to the information about the first path, to switch a service to the first path; and
a sending unit 1103, configured to forward, on the first path, the information about the first path to a downstream node, so that a downstream node that is of the intermediate node and is capable of 1+1 protection determines, according to the information about the first path, to switch the service to a data channel corresponding to the first path.

Exemplarily, the receiving unit 1101 may receive the information about a first path sent by the source node A, or receive the information about a first path sent by another intermediate node.

Specifically, if the intermediate node 110 is next to the source node A in a node sequence in the first path, for example, an intermediate node B is next to the source node A on the first path, then the receiving unit 1101 receives the information about the first path sent by the source node A.

If the intermediate node 110 is next to another intermediate node on the first path, for example, an intermediate node E is next to the intermediate node B on the first path, then the receiving unit 1101 receives the information about the first path sent by the intermediate node B.

Exemplarily, the determining unit 1102 is specifically configured to:
if 1+1 protection exists on the intermediate node, determine whether a current selective data channel is consistent with the data channel corresponding to the first path and is indicated in the information about the first path;
if consistent, determine that the local node does not perform switching;
if inconsistent, switch the service to the data channel corresponding to the first path.

Specifically, in this embodiment, the intermediate node B is not a cross-connect node in a topology of an entire network, and therefore, no 1+1 protection exists on the intermediate node B, and the intermediate node B terminates the switching process directly. A specific process is not repeated herein any further.

The intermediate node E is a cross-connect node in the topology of the entire network, and therefore, 1+1 protection exists on the intermediate node E. In addition, a current selective receiving path of the intermediate node E is indicated by a dashed line arrow in FIG. 2, and corresponds to a data channel corresponding to the path LSP 1, which is inconsistent with the data channel corresponding to the first path LSP 1b in the information about the first path. Therefore, the intermediate node E needs to perform switching to the data channel corresponding to the path LSP 1b, as indicated by a dotted line arrow in FIG. 2.

Exemplarily, after switching of each intermediate node is complete, the sending unit 1103 sends the information about the first path to its downstream node according to the first path, so that the determining unit 1102 of the downstream node performs determining and switching according to the information about the first path until the information about the first path is sent to the sink node.

In the node 110 provided in this embodiment of the present invention, a bidirectional switching function is implemented when a path is faulty, and it is ensured that selective receiving paths are the same between a head end and a tail end, and therefore, requirements of a network application that imposes a stringent round-trip delay requirement are met and convenience is provided for daily maintenance of a network.

Referring to FIG. 12, FIG. 12 is a hardware apparatus diagram of a node 90 according to an embodiment of the present invention. The node 90 may be a source node A shown in FIG. 2, including:
at least one receiver 1201, at least one processor 1202, at least one sender 1203, at least one memory 1204, and at least one communications bus 1205 that is configured to implement connections and mutual communication between the apparatuses.

The communications bus 1205 may be an industry standard architecture (Industry Standard Architecture, ISA for short) bus, a peripheral component interconnection (Peripheral Component, PCI for short) bus, or an extended industry standard architecture (Extended Industry Standard Architecture, EISA for short) bus, or the like. The bus 1205 may be categorized as an address bus, a data bus, a control bus, and the like. For ease of illustration, only one bold line is used in FIG. 12 to represent the bus, which, however, does not mean there is only one bus or only one type of bus.

The memory 1204 is configured to store executable program code, where the program code includes computer operation instructions. The memory 1204 may include a high-speed RAM memory, and may further include a nonvolatile memory (non-volatile memory), for example, at least one disk memory.

The receiver 1201 is configured to receive candidate path information sent by a node that detects a fault, where the candidate path information includes information about a path among paths from the local node to the node that detects a fault, where the path is compliant, after the node that detects a fault performs selective receiving switching, with a selective receiving direction of the node that detects a fault.

The processor 1202 may be a central processing unit (Central Processing Unit, CPU for short), or an application specific integrated circuit (Application Specific Integrated Circuit, ASIC for short), or one or more integrated circuits configured to implement the embodiments of the present invention.

The processor 1202 is configured to execute the executable program code stored in the memory 1204, such as a computer program, so as to run a program corresponding to the executable code.

The processor 1202 is configured to acquire a first path according to the candidate path information, and switch a service to a data channel corresponding to the first path.

The sender 1203 is configured to send, on the first path, information about the first path to a sink node, so that a node capable of 1+1 protection on the first path determines, according to the information about the first path, to switch the service to the data channel corresponding to the first path, where the first path is a path between the local node and the sink node, and the information about the first path includes information indicating that the first path is a switched path.

Exemplarily, the processor 1202 may be configured to use a candidate path in a non-working state and in a non-alarm state in the candidate path information as the first path according to a working state and an alarm state of each candidate path included in the candidate path information.

Exemplarily, in the information about the first path, an object in an RSVP-TE message is reused or extended to indicate that the first path is a switched path.

In the node 90 provided in this embodiment of the present invention, a bidirectional switching function is implemented when a path is faulty, and it is ensured that selective receiving paths are the same between a head end and a tail end, and therefore, requirements of a network application that imposes a stringent round-trip delay requirement are met and convenience is provided for daily maintenance of a network.

Referring to FIG. 13, FIG. 13 is a hardware apparatus diagram of a node 100 according to an embodiment of the present invention. The node 100 may correspond to a node G that detects a fault, as shown in FIG. 2, including:
at least one processor 1301, at least one sender 1302, at least one receiver 1303, at least one memory 1304, and at least one communications bus 1305 that is configured to implement connections and mutual communication between the apparatuses.

The communications bus 1305 may be an industry standard architecture (Industry Standard Architecture, ISA for short) bus, a peripheral component interconnection (Peripheral Component, PCI for short) bus, or an extended industry standard architecture (Extended Industry Standard Architecture, EISA for short) bus, or the like. The bus 1305 may be categorized into an address bus, a data bus, a control bus, and the like. For ease of illustration, only one bold line is used in FIG. 13 to represent the bus, which, however, does not mean there is only one bus or only one type of bus.

The memory 1304 is configured to store executable program code, where the program code includes computer operation instructions. The memory 1304 may include a high-speed RAM memory, and may further include a nonvolatile memory (non-volatile memory), for example, at least one disk memory.

The processor 1301 may be a central processing unit (Central Processing Unit, CPU for short), or an application specific integrated circuit (Application Specific Integrated Circuit, ASIC for short), or one or more integrated circuits configured to implement the embodiments of the present invention.

The processor 1301 is configured to execute the executable program code stored in the memory 1304, such as a computer program, so as to run a program corresponding to the executable code.

The processor 1301 is configured to perform selective receiving switching,
and generate candidate path information according to a selective receiving direction of the local node after the selective receiving switching, where the candidate path information includes information about a path among paths from a source node to the local node, where the path is compliant with the selective receiving direction of the local node.

Exemplarily, in the candidate path information, an object in an RSVP-TE message is extended to indicate the candidate path information.

The sender 1302 is configured to send the candidate path information to the source node, so that the source node acquires a first path according to the candidate path information and switches a service to a data channel corresponding to the first path, and the source node sends, on the first path, information about the first path to a sink node, where the first path is a path between the source node and the sink node, and the information about the first path includes information indicating that the first path is a switched path.

Exemplarily, the sender 1302 may send the candidate path information to the source node by means of routing. Specifically, an ASON network control plane may send the candidate path information to the source node A by means of routing, which is not limited by this embodiment of the present invention.

The receiver 1303 is configured to receive the information about the first path.

The processor 1301 may be further configured to determine, according to the received information about the first path, to switch the service to the data channel corresponding to the first path.

In the node 100 provided in this embodiment of the present invention, a bidirectional switching function is implemented when a path is faulty, and it is ensured that selective receiving paths are the same between a head end and a tail end, and therefore, requirements of a network application that imposes a stringent round-trip delay requirement are met and convenience is provided for daily maintenance of a network.

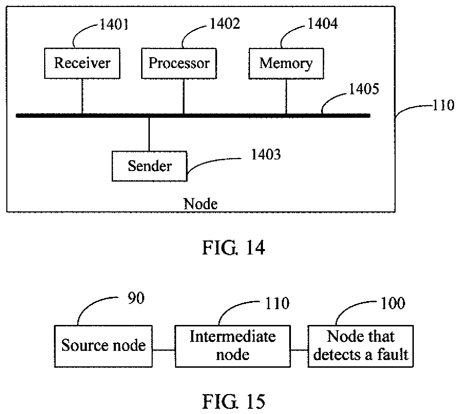

Referring to FIG. 14, FIG. 14 shows a node 110 according to an embodiment of the present invention. The node 110 may correspond to another node except a source node A and a sink node shown in FIG. 2, including:
at least one receiver 1401, at least one processor 1402, at least one sender 1403, at least one memory 1404, and at least one communications bus 1405 that is configured to implement connection and mutual communication between the apparatuses.

The communications bus 1405 may be an industry standard architecture (Industry Standard Architecture, ISA for short) bus, a peripheral component interconnection (Peripheral Component, PCI for short) bus, or an extended industry standard architecture (Extended Industry Standard Architecture, EISA for short) bus, or the like. The bus 1405 may be categorized into an address bus, a data bus, a control bus, and the like. For ease of illustration, only one bold line is used in FIG. 14 to represent the bus, which, however, does not mean there is only one bus or only one type of bus.

The memory 1404 is configured to store executable program code, where the program code includes computer operation instructions. The memory 1404 may include a high-speed RAM memory, and may further include a nonvolatile memory (non-volatile memory), for example, at least one disk memory.

The receiver 1401 is configured to receive information about a first path, where the information about the first path is information sent, on the first path, by a source node to a sink node and includes information indicating that the first path is a switched path, the local node is a node capable of 1+1 protection on the first path, and the first path is a path between the source node and the sink node.

Exemplarily, the receiver 1401 may receive the information about a first path sent by the source node A, or receive the information about a first path sent by another intermediate node.

Specifically, if the intermediate node 110 is next to the source node A on the first path, for example, an intermediate node B is next to the source node A on the first path, then the receiver 1401 receives the information about the first path sent by the source node A.

If the intermediate node 110 is next to another intermediate node on the first path, for example, an intermediate node E is next to the intermediate node B on the first path, then the receiver 1401 receives the information about the first path sent by the intermediate node B.

The processor 1402 may be a central processing unit (Central Processing Unit, CPU for short), or an application specific integrated circuit (Application Specific Integrated Circuit, ASIC for short), or one or more integrated circuits configured to implement the embodiments of the present invention.

The processor 1402 is configured to execute the executable program code stored in the memory 1404, such as a computer program, so as to run a program corresponding to the executable code.

The processor 1402 is configured to determine, according to the information about the first path, to switch a service to the first path.

Exemplarily, the determining, by the processor 1402 according to the information about the first path, to switch a service to the first path, may specifically include:
if 1+1 protection exists on the local node, determining, by the processor 1402, whether a current selective data channel is consistent with the data channel corresponding to the first path and is indicated in the information about the first path;
if consistent, determining, by the processor 1402, that the local node does not perform switching;
if inconsistent, switching, by the processor 1402, the service to the data channel corresponding to the first path.

Specifically, in this embodiment, the intermediate node B is not a cross-connect node in a topology of an entire network, and therefore, no 1+1 protection exists on the intermediate node B, and the processor 1402 of the intermediate node B terminates the switching process directly.

The intermediate node E is a cross-connect node in the topology of the entire network, and therefore, the processor 1402 determines that 1+1 protection exists on the intermediate node E. In addition, a current selective receiving path of the intermediate node E is indicated by a dashed line arrow in FIG. 2, and corresponds to a data channel corresponding to the path LSP 1, which is inconsistent with the data channel corresponding to the first path LSP 1b in the information about the first path. Therefore, the processor 1402 determines that the intermediate node 110 performs switching, and the processor 1402 switches a current selective receiving path LSP 1 of the intermediate node 110 to the path LSP 1b, as indicated by a dotted line arrow in FIG. 2.

The sender 1403 is configured to forward, on the first path, the information about the first path to a downstream node, so that a downstream node capable of 1+1 protection determines, according to the information about the first path, to switch the service to the data channel corresponding to the first path.

Exemplarily, after switching of each intermediate node is complete, the sender 1403 sends the information about the first path to its downstream node according to the first path, so that the downstream node repeats step 802 until the information about the first path is sent to the sink node.

In the node 110 provided in this embodiment of the present invention, a bidirectional switching function is implemented when a path is faulty, and it is ensured that selective receiving paths are the same between a head end and a tail end, and therefore, requirements of a network application that imposes a stringent round-trip delay requirement are met and convenience is provided for daily maintenance of a network.

Referring to FIG. 15, FIG. 15 shows a 1+1 end-to-end bidirectional switching system in an ASON network according to an embodiment of the present invention, where the system includes a source node 90 described in any one of the foregoing embodiments, a node 100 that detects a fault described in any one of the foregoing embodiments, and at least one intermediate node 110 described in any one of the foregoing embodiments.

In the 1+1 end-to-end bidirectional switching system provided in this embodiment of the present invention, a bidirectional switching function is implemented when a path is faulty, and it is ensured that selective receiving paths are the same between a head end and a tail end, and therefore, requirements of a network application that imposes a stringent round-trip delay requirement are met and convenience is provided for daily maintenance of a network.

In the several embodiments provided in the present application, it should be understood that the disclosed system, apparatus, and method may be implemented in other manners. For example, the foregoing apparatus embodiments are merely exemplary. For example, the unit division is merely logical function division and may be other division in actual implementation. For example, a plurality of units or components may be combined or integrated into another system, or some features may be ignored or not performed. From another point, the displayed or discussed mutual couplings or direct couplings or communication connections may be implemented by using some interfaces. Indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may be included separately and physically, or two or more units are integrated into one unit. The integrated unit may be implemented in a form of hardware, or may be implemented in a form of a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, a network device, or the like) to perform a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A 1+1 end-to-end bidirectional switching method, comprising:
receiving (S301), by a source node, candidate path information sent by a node that detects a fault and that is capable of performing selective receiving direction path switching, wherein the candidate path information comprises information about at least a path different from the working path and the protection path between the source node and the node that detects the fault among paths from the source node to the node that detects a fault, wherein the path is compliant, after the node that detects a fault performs selective receiving direction path switching, with a selective receiving direction path of the node that detects a fault;
acquiring (S302), by the source node, a first path according to the candidate path information, and switching a service to a data channel corresponding to the first path; and
sending (S303), by the source node, on the first path, information about the first path to a sink node, so that an intermediate node capable of 1+1 protection on the first path determines, according to the information about the first path, to switch the service to the data channel corresponding to the first path, wherein the first path is a path between the source node and the sink node, and the information about the first path comprises information indicating that the first path is a switched path and an object in an Resource Reservation Protocol-Traffic Engineering, RSVP-TE, message indicates that the first path is a switched path;
wherein
the acquiring (S302), by the source node, a first path according to the candidate path information, comprises:
using, by the source node, a candidate path in a non-working state and in a non-alarm state in the candidate path information and according to a network delay as the first path according to a working state and an alarm state of each candidate path comprised in the candidate path information.

2. A 1+1 end-to-end bidirectional switching method, comprising:
performing (S401), by a node that detects a fault and that is capable of performing selective receiving direction path switching, selective receiving direction path switching, and generating candidate path information according to a selective receiving direction path, of the node that detects a fault, which is acquired after the selective receiving direction path switching, wherein the candidate path information comprises information about at least a path different from the working path and the protection path between the source node and the node that detects the fault among paths from the source node to the node that detects a fault, wherein the path is compliant with the selective receiving direction path of the node that detects a fault and is selected according to a network delay;
sending (S402), by the node that detects a fault, the candidate path information to the source node, so that the source node acquires a first path according to the candidate path information and switches a service to a data channel corresponding to the first path, wherein the acquiring, by the source node, a first path according to the candidate path information, comprises:
using, by the source node, a candidate path in a non-working state and in a non-alarm state in the candidate path information as the first path according to a working state and an alarm state of each candidate path comprised in the candidate path information, and the source node sends, on the first path, information about the first path to a sink node, so that an intermediate node capable of 1+1 protection on the first path determines, according to the information about the first path, to switch the service to the data channel corresponding to the first path, wherein the first path is a path between the source node and the sink node, and the information about the first path comprises information indicating that the first path is a switched path and an object in an Resource Reservation Protocol-Traffic Engineering, RSVP-TE, message indicates that the first path is a switched path; and
determining (S403), by the node that detects a fault according to the received information about the first path, to switch the service to the data channel corresponding to the first path.

3. The method according to claim 2, wherein the sending, by the node that detects a fault, the candidate path information to the source node, specifically comprises: sending, by the node that detects a fault, the candidate path information to the source node by means of routing.

4. A 1+1 end-to-end bidirectional switching method, comprising:
receiving (S501), by an intermediate node, information about a first path, wherein the information about the first path is information sent, on the first path, by a source node to a sink node wherein the first path is a path in a non-working state and in a non-alarm state and is acquired by the source node according to a working state and an alarm state and according to a network delay of each candidate path comprised in candidate path information, and comprises information indicating that the first path is a switched path and an object in an Resource Reservation Protocol-Traffic Engineering, RSVP-TE, message indicates that the first path is a switched path, the intermediate node is a node capable of 1+1 protection on the first path, and the first path is a path between the source node and the sink node;
determining (S502), by the intermediate node according to the information about the first path, to switch a service to the first path; and
forwarding (S503), by the intermediate node, on the first path, the information about the first path to a downstream node, so that a downstream node capable of 1+1 protection determines, according to the information about the first path, to switch the service to a data channel corresponding to the first path.

5. The method according to claim 4, wherein the determining, by the intermediate node according to the information about the first path, to switch a service to the first path, specifically comprises:
if 1+1 protection exists on the intermediate node, determining, by the intermediate node, whether a current selective data channel is consistent with the data channel corresponding to the first path and is indicated in the information about the first path;
if consistent, determining that the intermediate node does not perform switching;
if inconsistent, switching the service to the data channel corresponding to the first path.

6. A source node (90), comprising:
a receiving unit (901), configured to receive candidate path information sent by a node that detects a fault and that is capable of performing selective receiving direction path switching, wherein the candidate path information comprises information about at least a path different from the working path and the protection path between the node (90) and the node that detects the fault among paths from the node (90) to the node that detects a fault, wherein the path is compliant, after the node that detects a fault performs selective receiving direction path switching, with a selective receiving direction path of the node that detects a fault;
an acquiring unit (902), configured to acquire a first path according to the candidate path information;
a switching unit (903), configured to switch a service to a data channel corresponding to the first path; and
a sending unit (904), configured to send, on the first path, information about the first path to a sink node, so that an intermediate node capable of 1+1 protection on the first path determines, according to the information about the first path, to switch the service to the data channel corresponding to the first path, wherein the first path is a path between the node (90) and the sink node, and the information about the first path comprises information indicating that the first path is a switched path and an object in an Resource Reservation Protocol-Traffic Engineering, RSVP-TE, message indicates that the first path is a switched path;
wherein the acquiring unit (902) is configured to use a candidate path in a non-working state and in a non-alarm state and according to a network delay in the candidate path information as the first path according to a working state and an alarm state of each candidate path comprised in the candidate path information.

7. A node that detects a fault (100), comprising:
a switching unit (1001), configured to perform selective receiving path switching;
a generating unit (1002), configured to generate candidate path information according to a selective receiving direction path of the node (100) after the selective receiving direction path switching, wherein the candidate path information comprises information about at least a path different from the working path and the protection path between a source node and the node (100) among paths from the source node to the node (100), wherein the path is compliant with the selective receiving direction path of the node (100);
a sending unit (1003), configured to send the candidate path information to the source node, so that the source node acquires a first path according to the candidate path information and switches a service to a data channel corresponding to the first path, wherein the acquiring, by the source node, a first path according to the candidate path information, comprises:
using, by the source node, a candidate path in a non-working state and in a non-alarm state in the candidate path information and according to a network delay as the first path according to a working state and an alarm state of each candidate path comprised in the candidate path information, and the source node sends, on the first path, information about the first path to a sink node, so that an intermediate node capable of 1+1 protection on the first path determines, according to the information about the first path, to switch the service to the data channel corresponding to the first path, wherein the first path is a path between the source node and the sink node, and the information about the first path comprises information indicating that the first path is a switched path and an object in an Resource Reservation Protocol-Traffic Engineering, RSVP-TE, message indicates that the first path is a switched path; and
a receiving determining unit (1004), configured to determine, according to the received information about the first path, to switch the service to the data channel corresponding to the first path.

8. The node (100) according to claim 7, wherein the sending unit (1004) is configured to send the candidate path information to the source node by means of routing.

9. An intermediate node (110), comprising:
a receiving unit (1101), configured to receive information about a first path, wherein the information about the first path is information sent by a source node, on the first path, to a sink node wherein the first path is a path in a non-working state and in a non-alarm state and is acquired by the source node according to a working state and an alarm state and according to a network delay of each candidate path comprised in candidate path information, and comprises information indicating that the first path is a switched path and an object in an Resource Reservation Protocol-Traffic Engineering, RSVP-TE, message indicates that the first path is a switched path, the node (110) is a node capable of 1+1 protection on the first path, and the first path is a path between the source node and the sink node;
a determining unit (1102), configured to determine, according to the information about the first path, to switch a service to the first path; and
a sending unit (1103), configured to forward, on the first path, the information about the first path to a downstream node, so that a downstream node capable of 1+1 protection determines, according to the information about the first path, to switch the service to a data channel corresponding to the first path.

10. The node (110) according to claim 9, wherein the determining unit (1102) is specifically configured to:
if 1+1 protection exists on the node (110), determine whether a current selective data channel is consistent with the data channel corresponding to the first path and is indicated in the information about the first path;
if consistent, determine that the node (110) does not perform switching;
if inconsistent, switch the service to the data channel corresponding to the first path.

11. A 1+1 end-to-end bidirectional switching system, wherein the system comprises the source node according to claim 6, the node that detects a fault according to claim 7 or 8, and at least one intermediate node according to claim9 or 10.

## Patentansprüche

1. Bidirektionales 1+1-End-to-End-Schaltverfahren, aufweisend:
Empfangen (S301), durch einen Quellknoten, von Kandidatenpfadinformationen, die von einem Knoten gesendet werden, der einen Fehler detektiert und der fähig ist, eine selektive Empfangsrichtungspfadumschaltung durchzuführen, wobei die Kandidatenpfadinformationen Informationen über mindestens einen Pfad, der sich von dem Arbeitspfad und dem Schutzpfad zwischen dem Quellknoten und dem Knoten, der den Fehler detektiert, unterscheidet, unter Pfaden von dem Quellknoten zu dem Knoten, der einen Fehler detektiert, aufweisen, wobei der Pfad, nachdem der Knoten, der einen Fehler detektiert, eine selektive Empfangsrichtungspfadumschaltung durchführt, konform ist mit einem selektiven Empfangsrichtungspfad des Knotens, der einen Fehler detektiert;
Erfassen (S302), durch den Quellknoten, eines ersten Pfads gemäß den Kandidatenpfadinformationen und Umschalten eines Dienstes auf einen Datenkanal, der dem ersten Pfad entspricht; und
Senden (S303), durch den Quellknoten, auf dem ersten Pfad, von Informationen über den ersten Pfad an einen Senkenknoten, so dass ein Zwischenknoten, der zu einem 1+1-Schutz auf dem ersten Pfad fähig ist, bestimmt, gemäß den Informationen über den ersten Pfad, den Dienst auf den Datenkanal umzuschalten, der dem ersten Pfad entspricht, wobei der erste Pfad ein Pfad zwischen dem Quellknoten und dem Senkenknoten ist und die Informationen über den ersten Pfad Informationen aufweisen, die anzeigen, dass der erste Pfad ein umgeschalteter Pfad ist, und ein Objekt in einer Ressourcenreservierungsprotokoll-"Traffic-Engineering"(RSVP-TE)-Nachricht anzeigt, dass der erste Pfad ein umgeschalteter Pfad ist;
wobei
das Erfassen (S302), durch den Quellknoten, eines ersten Pfads gemäß den Kandidatenpfadinformationen aufweist:
Verwenden, durch den Quellknoten, eines Kandidatenpfads in einem Nichtarbeitszustand und in einem Nichtalarmzustand in den Kandidatenpfadinformationen und gemäß einer Netzwerkverzögerung als den ersten Pfad gemäß einem Arbeitszustand und einem Alarmzustand jedes Kandidatenpfads, der in den Kandidatenpfadinformationen enthalten ist.

2. Bidirektionales 1+1-End-to-End-Schaltverfahren, aufweisend:
Durchführen (S401), durch einen Knoten, der einen Fehler detektiert und der fähig ist, eine selektive Empfangsrichtungspfadumschaltung durchzuführen, einer selektiven Empfangsrichtungspfadumschaltung, und Erzeugen von Kandidatenpfadinformationen gemäß einem selektiven Empfangsrichtungspfad des Knotens, der einen Fehler detektiert, der nach der selektiven Empfangsrichtungspfadumschaltung erfasst wird, wobei die Kandidatenpfadinformationen Informationen über mindestens einen Pfad, der sich von dem Arbeitspfad und dem Schutzpfad zwischen dem Quellknoten und dem Knoten, der den Fehler detektiert, unterscheidet, unter Pfaden von dem Quellknoten zu dem Knoten, der einen Fehler detektiert, aufweisen, wobei der Pfad konform ist mit dem selektiven Empfangsrichtungspfad des Knotens, der einen Fehler detektiert und gemäß einer Netzwerkverzögerung ausgewählt wird;
Senden (S402), durch den Knoten, der einen Fehler detektiert, der Kandidatenpfadinformationen an den Quellknoten, so dass der Quellknoten einen ersten Pfad gemäß den Kandidatenpfadinformationen erfasst und einen Dienst auf einen Datenkanal, der dem ersten Pfad entspricht, umschaltet, wobei das Erfassen, durch den Quellknoten, eines ersten Pfads gemäß den Kandidatenpfadinformationen aufweist:
Verwenden, durch den Quellknoten, eines Kandidatenpfads in einem Nichtarbeitszustand und in einem Nichtalarmzustand in den Kandidatenpfadinformationen als den ersten Pfad gemäß einem Arbeitszustand und einem Alarmzustand jedes Kandidatenpfads, der in den Kandidatenpfadinformationen enthalten ist, und der Quellknoten sendet, auf dem ersten Pfad, Informationen über den ersten Pfad an einen Senkenknoten, so dass ein Zwischenknoten, der zu einem 1+1-Schutz auf dem ersten Pfad fähig ist, bestimmt, gemäß den Informationen über den ersten Pfad, den Dienst auf den Datenkanal umzuschalten, der dem ersten Pfad entspricht, wobei der erste Pfad ein Pfad zwischen dem Quellknoten und dem Senkenknoten ist und die Informationen über den ersten Pfad Informationen aufweisen, die anzeigen, dass der erste Pfad ein umgeschalteter Pfad ist, und ein Objekt in einer Ressourcenreservierungsprotokoll-"Traffic-Engineering"(RSVP-TE)-Nachricht anzeigt, dass der erste Pfad ein umgeschalteter Pfad ist; und
Bestimmen (S403), durch den Knoten, der einen Fehler gemäß den empfangenen Informationen über den ersten Pfad detektiert, den Dienst auf den Datenkanal, der dem ersten Pfad entspricht, umzuschalten.

3. Verfahren gemäß Anspruch 2, wobei das Senden, durch den Knoten, der einen Fehler detektiert, von Kandidatenpfadinformationen an den Quellknoten insbesondere aufweist: Senden, durch den Knoten, der einen Fehler detektiert, der Kandidatenpfadinformationen an den Quellknoten mittels Routen.

4. Bidirektionales 1+1-End-to-End-Schaltverfahren, aufweisend:
Empfangen (S501), durch einen Zwischenknoten, von Informationen über einen ersten Pfad, wobei die Informationen über den ersten Pfad Informationen sind, die auf dem ersten Pfad durch einen Quellknoten an einen Senkenknoten gesendet werden, wobei der erste Pfad ein Pfad in einem Nichtarbeitszustand und in einem Nichtalarmzustand ist und durch den Quellknoten erfasst wird, gemäß einem Arbeitszustand und einem Alarmzustand und gemäß einer Netzwerkverzögerung jedes Kandidatenpfads, der in Kandidatenpfadinformationen enthalten ist, und Informationen aufweist, die anzeigen, dass der erste Pfad ein umgeschalteter Pfad ist, und ein Objekt in einer Ressourcenreservierungsprotokoll-"Traffic-Engineering"(RSVP-TE)-Nachricht anzeigt, dass der erste Pfad ein umgeschalteter Pfad ist, der Zwischenknoten ein Knoten ist, der zu einem 1+1-Schutz auf dem ersten Pfad fähig ist, und der erste Pfad ein Pfad zwischen dem Quellknoten und dem Senkenknoten ist;
Bestimmen (S502), durch den Zwischenknoten, gemäß den Informationen über den ersten Pfad, einen Dienst auf den ersten Pfad umzuschalten; und
Weiterleiten (S503), durch den Zwischenknoten, auf dem ersten Pfad, der Informationen über den ersten Pfad an einen nachgeschalteten Knoten, so dass ein nachgeschalteter Knoten, der zu einem 1+1-Schutz fähig ist, bestimmt, gemäß den Informationen über den ersten Pfad, den Dienst auf einen Datenkanal, der dem ersten Pfad entspricht, umzuschalten.

5. Verfahren gemäß Anspruch 4, wobei das Bestimmen, durch den Zwischenknoten gemäß den Informationen über den ersten Pfad, einen Dienst auf den ersten Pfad umzuschalten, insbesondere aufweist:
wenn ein 1+1-Schutz auf dem Zwischenknoten existiert, Bestimmen, durch den Zwischenknoten, ob ein aktueller selektiver Datenkanal mit dem Datenkanal konsistent ist, der dem ersten Pfad entspricht, und in den Informationen über den ersten Pfad angegeben ist;
wenn konsistent, Bestimmen, dass der Zwischenknoten keine Umschaltung durchführt;
wenn nicht konsistent, Umschalten des Dienstes auf den Datenkanal, der dem ersten Pfad entspricht.

6. Quellknoten (90), aufweisend:
eine Empfangseinheit (901), die konfiguriert ist, Kandidatenpfadinformationen zu empfangen, die von einem Knoten gesendet werden, der einen Fehler detektiert und der fähig ist, eine selektive Empfangsrichtungspfadumschaltung durchzuführen, wobei die Kandidatenpfadinformationen Informationen über mindestens einen Pfad, der sich von dem Arbeitspfad und dem Schutzpfad zwischen dem Knoten (90) und dem Knoten, der den Fehler detektiert, unterscheidet, unter Pfaden von dem Knoten (90) zu dem Knoten, der einen Fehler detektiert, aufweisen, wobei der Pfad, nachdem der Knoten, der einen Fehler detektiert, eine selektive Empfangsrichtungspfadumschaltung durchführt, konform ist mit einem selektiven Empfangsrichtungspfad des Knotens, der einen Fehler detektiert;
eine Erfassungseinheit (902), die konfiguriert ist, einen ersten Pfad gemäß den Kandidatenpfadinformationen zu erfassen;
eine Schalteinheit (903), die konfiguriert ist, einen Dienst auf einen Datenkanal umzuschalten, der dem ersten Pfad entspricht; und
eine Sendeeinheit (904), die konfiguriert ist, Informationen über den ersten Pfad auf dem ersten Pfad an einen Senkenknoten zu senden, so dass ein Zwischenknoten, der zu einem 1+1-Schutz auf dem ersten Pfad fähig ist, bestimmt, gemäß den Informationen über den ersten Pfad, den Dienst auf den Datenkanal umzuschalten, der dem ersten Pfad entspricht, wobei der erste Pfad ein Pfad zwischen dem Knoten (90) und dem Senkenknoten ist und die Informationen über den ersten Pfad Informationen aufweisen, die anzeigen, dass der erste Pfad ein umgeschalteter Pfad ist, und ein Objekt in einer Ressourcenreservierungsprotokoll-"Traffic-Engineering"(RSVP-TE)-Nachricht anzeigt, dass der erste Pfad ein umgeschalteter Pfad ist;
wobei die Erfassungseinheit (902) konfiguriert ist, einen Kandidatenpfad in einem Nichtarbeitszustand und in einem Nichtalarmzustand und gemäß einer Netzwerkverzögerung in den Kandidatenpfadinformationen als den ersten Pfad zu verwenden, gemäß einem Arbeitszustand und einem Alarmzustand jedes Kandidatenpfads, der in den Kandidatenpfadinformationen enthalten ist.

7. Knoten, der einen Fehler detektiert (100), aufweisend:
eine Schalteinheit (1001), die konfiguriert ist, eine selektive Empfangspfadumschaltung durchzuführen;
eine Erzeugungseinheit (1002), die konfiguriert ist, Kandidatenpfadinformationen gemäß einem selektiven Empfangsrichtungspfad des Knotens (100) zu erzeugen, nach der selektiven Empfangsrichtungspfadumschaltung, wobei die Kandidatenpfadinformationen Informationen über mindestens einen Pfad, der sich von dem Arbeitspfad und dem Schutzpfad zwischen einem Quellknoten und dem Knoten (100) unterscheidet, unter Pfaden von dem Quellknoten zu dem Knoten (100) aufweisen, wobei der Pfad mit dem selektiven Empfangsrichtungspfad des Knotens (100) konform ist;
eine Sendeeinheit (1003), die konfiguriert ist, die Kandidatenpfadinformationen an den Quellknoten zu senden, so dass der Quellknoten einen ersten Pfad gemäß den Kandidatenpfadinformationen erfasst und einen Dienst auf einen Datenkanal umschaltet, der dem ersten Pfad entspricht, wobei das Erfassen, durch den Quellknoten, eines ersten Pfads gemäß den Kandidatenpfadinformationen aufweist:
Verwenden, durch den Quellknoten, eines Kandidatenpfads in einem Nichtarbeitszustand und in einem Nichtalarmzustand in den Kandidatenpfadinformationen und gemäß einer Netzwerkverzögerung als den ersten Pfad gemäß einem Arbeitszustand und einem Alarmzustand jedes Kandidatenpfads, der in den Kandidatenpfadinformationen enthalten ist, und der Quellknoten sendet, auf dem ersten Pfad, Informationen über den ersten Pfad an einen Senkenknoten, so dass ein Zwischenknoten, der zu einem 1+1-Schutz auf dem ersten Pfad fähig ist, bestimmt, gemäß den Informationen über den ersten Pfad, den Dienst auf den Datenkanal, der dem ersten Pfad entspricht, umzuschalten,
wobei der erste Pfad ein Pfad zwischen dem Quellknoten und dem Senkenknoten ist und die Informationen über den ersten Pfad Informationen enthalten, die anzeigen, dass der erste Pfad ein umgeschalteter Pfad ist, und ein Objekt in einer Ressourcenreservierungsprotokoll-"Traffic-Engineering"(RSVP-TE)-Nachricht anzeigt, dass der erste Pfad ein umgeschalteter Pfad ist; und
eine Empfangsbestimmungseinheit (1004), die konfiguriert ist, zu bestimmen, gemäß den empfangenen Informationen über den ersten Pfad, den Dienst auf den Datenkanal umzuschalten, der dem ersten Pfad entspricht.

8. Knoten (100) gemäß Anspruch 7, wobei die Sendeeinheit (1004) konfiguriert ist, die Kandidatenpfadinformationen an den Quellknoten mittels Routen zu senden.

9. Zwischenknoten (110), aufweisend:
eine Empfangseinheit (1101), die konfiguriert ist, Informationen über einen ersten Pfad zu empfangen, wobei die Informationen über den ersten Pfad Informationen sind, die von einem Quellknoten auf dem ersten Pfad an einen Senkenknoten gesendet werden, wobei der erste Pfad ein Pfad in einem Nichtarbeitszustand und in einem Nichtalarmzustand ist und von dem Quellknoten erfasst ist, gemäß einem Arbeitszustand und einem Alarmzustand und gemäß einer Netzwerkverzögerung jedes Kandidatenpfads, der in Kandidatenpfadinformationen enthalten ist, und Informationen aufweisen, die anzeigen, dass der erste Pfad ein umgeschalteter Pfad ist, und ein Objekt in einer Ressourcenreservierungsprotokoll-"Traffic-Engineering"(RSVP-TE)-Nachricht anzeigt, dass der erste Pfad ein umgeschalteter Pfad ist, der Knoten (110) ein Knoten ist, der zu einem 1+1-Schutz auf dem ersten Pfad fähig ist, und der erste Pfad ein Pfad zwischen dem Quellknoten und dem Senkenknoten ist;
eine Bestimmungseinheit (1102), die konfiguriert ist, zu bestimmen, gemäß den Informationen über den ersten Pfad, einen Dienst auf den ersten Pfad umzuschalten; und
eine Sendeeinheit (1103), die konfiguriert ist, die Informationen über den ersten Pfad auf dem ersten Pfad an einen nachgeschalteten Knoten weiterzuleiten, so dass ein nachgeschalteter Knoten, der zu einem 1+1-Schutz fähig ist, bestimmt, gemäß den Informationen über den ersten Pfad, den Dienst auf einen Datenkanal, der dem ersten Pfad entspricht, umzuschalten.

10. Knoten (110) gemäß Anspruch 9, wobei die Bestimmungseinheit (1102) insbesondere konfiguriert ist zum:
wenn 1+1-Schutz auf dem Knoten (110) existiert, Bestimmen, ob ein aktueller selektiver Datenkanal mit Datenkanal, der dem ersten Pfad entspricht, konsistent ist und in den Informationen über den ersten Pfad angegeben ist;
wenn konsistent, Bestimmen, dass der Knoten (110) keine Umschaltung durchführt; wenn nicht konsistent, Umschalten des Dienstes auf den Datenkanal, der dem ersten Pfad entspricht.

11. Bidirektionales 1+1-End-to-End-Schaltsystem, wobei das System den Quellknoten gemäß Anspruch 6, den Knoten, der einen Fehler detektiert, gemäß Anspruch 7 oder 8, und mindestens einen Zwischenknoten gemäß Anspruch 9 oder 10 aufweist.

## Revendications

1. Procédé de commutation bidirectionnelle de bout en bout de type 1+1, comprenant les étapes suivantes :
recevoir (S301), par un noeud source, des informations de chemin candidat envoyées par un noeud qui détecte un défaut et qui est capable d'effectuer une commutation de chemin de direction de réception sélectif, où les informations de chemin candidat comprennent des informations concernant au moins un chemin différent du chemin de fonctionnement et du chemin de protection entre le noeud source et le noeud qui détecte le défaut entre les chemins allant du noeud source au noeud qui détecte un défaut, où le chemin est compatible, après que le noeud qui a détecté un défaut a effectué une commutation de chemin de direction de réception sélectif, avec un chemin de direction de réception sélectif du noeud qui détecte un défaut ;
acquérir (S302), par le noeud source, un premier chemin conformément aux informations de chemin candidat, et commuter un service vers un canal de données correspondant au premier chemin ; et
envoyer (S303), par le noeud source, sur le premier chemin, des informations concernant le premier chemin à un noeud collecteur, de manière à ce qu'un noeud intermédiaire capable d'une protection de type 1+1 sur le premier chemin détermine, conformément aux informations concernant le premier chemin, de commuter le service vers le canal de données correspondant au premier chemin, où le premier chemin est un chemin entre le noeud source et le noeud collecteur, et les informations concernant le premier chemin comprennent des informations indiquant que le premier chemin est un chemin commuté, et un objet dans un message RSVP-TE, Resource Reservation Protocol - Traffic Engineering, indique que le premier chemin est un chemin commuté ;
où
acquérir (S302), par le noeud source, un premier chemin conformément aux informations de chemin candidat, comprend l'étape suivante :
utiliser, par le noeud source, un chemin candidat dans un état de non-fonctionnement et dans un état de non-alarme dans les informations de chemin candidat et conformément à un délai de réseau comme premier chemin conformément à un état de fonctionnement et à un état d'alarme de chaque chemin candidat compris dans les informations de chemin candidat.

2. Procédé de commutation bidirectionnelle de bout en bout de type 1+1, comprenant les étapes suivantes :
exécuter (S401), par un noeud qui détecte un défaut et qui est capable d'effectuer une commutation de chemin de direction de réception sélectif, une commutation de chemin de direction de réception sélectif, et générer des informations de chemin candidat conformément à un chemin de direction de réception sélectif, du noeud qui détecte un défaut, qui sont acquises après la commutation de chemin de direction de réception sélectif, où les informations de chemin candidat comprennent des informations concernant au moins un chemin différent du chemin de fonctionnement et du chemin de protection entre le noeud source et le noeud qui détecte le défaut parmi les chemins allant du noeud source au noeud qui détecte un défaut, où le chemin est compatible avec le chemin de direction de réception sélectif du noeud qui détecte un défaut et est sélectionné conformément à un délai de réseau ;
envoyer (S402), par le noeud qui détecte un défaut, les informations de chemin candidat au noeud source, de manière à ce que le noeud source acquière un premier chemin conformément aux informations de chemin candidat et commute un service vers un canal de données correspondant au premier chemin, où l'acquisition, par le noeud source, d'un premier chemin conformément aux informations de chemin candidat, comprend les étapes suivantes :
utiliser, par le noeud source, un chemin candidat dans un état de non-fonctionnement et dans un état de non-alarme dans les informations de chemin candidat comme premier chemin conformément à un état de fonctionnement et à un état d'alarme de chaque chemin candidat compris dans les informations de chemin candidat, et le noeud source envoie, sur le premier chemin, des informations concernant le premier chemin à un noeud collecteur de manière à ce qu'un noeud intermédiaire capable d'une protection de type 1+1 sur le premier chemin détermine, conformément aux informations concernant le premier chemin, de commuter le service vers le canal de données correspondant au premier chemin, où le premier chemin est un chemin entre le noeud source et le noeud collecteur, et les informations concernant le premier chemin comprennent des informations indiquant que le premier chemin est un chemin commuté, et un objet dans un message RSVP-TE, Resource Reservation Protocol - Traffic Engineering, indique que le premier chemin est un chemin commuté ; et
déterminer (S403), par le noeud qui détecte un défaut conformément aux informations reçues concernant le premier chemin, de commuter le service vers le canal de données correspondant au premier chemin.

3. Procédé selon la revendication 2, dans lequel l'envoi, par le noeud qui détecte un défaut, des informations de chemin candidat au noeud source, comprend spécifiquement l'étape suivante : envoyer, par le noeud qui détecte un défaut, les informations de chemin candidat au noeud source au moyen d'un routage.

4. Procédé de commutation bidirectionnelle de bout en bout de type 1+1, comprenant les étapes suivantes :
recevoir (S501), par un noeud intermédiaire, des informations concernant un premier chemin, où les informations concernant le premier chemin sont des informations envoyées, sur le premier chemin, par un noeud source à un noeud collecteur, où le premier chemin est un chemin dans un état de non-fonctionnement et dans un état de non-alarme et est acquis par le noeud source conformément à un état de fonctionnement et à un état d'alarme et conformément à un délai de réseau de chaque chemin candidat compris dans les informations de chemin candidat, et comprend des informations indiquant que le premier chemin est un chemin commuté et un objet dans un message RSVP-TE, Resource Reservation Protocol - Traffic Engineering, indique que le premier chemin est un chemin commuté, le noeud intermédiaire est un noeud capable d'une protection de type 1+1 sur le premier chemin, et le premier chemin est un chemin entre le noeud source et le noeud collecteur ;
déterminer (S502), par le noeud intermédiaire conformément aux informations concernant le premier chemin, de commuter un service vers le premier chemin ; et
retransmettre (S503), par le noeud intermédiaire, sur le premier chemin, les informations concernant le premier chemin vers un noeud en aval, de manière à ce qu'un noeud en aval capable d'une protection de type 1+1 détermine, conformément aux informations concernant le premier chemin, de commuter le service vers un canal de données correspondant au premier chemin.

5. Procédé selon la revendication 4, dans lequel la détermination, par le noeud intermédiaire conformément aux informations concernant le premier chemin, de commuter un service vers le premier chemin, comprend en particulier les étapes suivantes :
si une protection de type 1+1 existe sur le noeud intermédiaire, déterminer, par le noeud intermédiaire, si un canal de données sélectif actuel est compatible avec le canal de données correspondant au premier chemin et est indiqué dans les informations concernant le premier chemin ;
s'il est compatible, déterminer que le noeud intermédiaire n'effectue pas de commutation ;
s'il n'est pas compatible, commuter le service vers le canal de données correspondant au premier chemin.

6. Noeud source (90), comprenant :
une unité de réception (901), configurée pour recevoir des informations de chemin candidat envoyées par un noeud qui détecte un défaut et qui est capable d'effectuer une commutation de chemin de direction de réception sélectif, où les informations de chemin candidat comprennent des informations concernant au moins un chemin différent du chemin de fonctionnement et du chemin de protection entre le noeud (90) et le noeud qui détecte le défaut entre les chemins allant du noeud (90) au noeud qui détecte un défaut, où le chemin est compatible, après que le noeud qui a détecté un défaut a effectué une commutation de chemin de direction de réception sélectif, avec un chemin de direction de réception sélectif du noeud qui détecte un défaut ;
une unité d'acquisition (902), configurée pour acquérir un premier chemin conformément aux informations de chemin candidat ;
une unité de commutation (903), configurée pour commuter un service vers un canal de données correspondant au premier chemin ; et
une unité d'envoi (904), configurée pour envoyer, sur le premier chemin, des informations concernant le premier chemin à un noeud collecteur, de manière à ce qu'un noeud intermédiaire capable d'une protection de type 1+1 sur le premier chemin détermine, conformément aux informations concernant le premier chemin, de commuter le service vers le canal de données correspondant au premier chemin, où le premier chemin est un chemin entre le noeud (90) et le noeud collecteur, et les informations concernant le premier chemin comprennent des informations indiquant que le premier chemin est un chemin commuté, et un objet dans un message RSVP-TE, Resource Reservation Protocol - Traffic Engineering, indique que le premier chemin est un chemin commuté ;
où l'unité d'acquisition (902) est configurée pour utiliser un chemin candidat dans un état de non-fonctionnement et dans un état de non-alarme et conformément à un délai de réseau dans les informations de chemin candidat comme premier chemin conformément à un état de fonctionnement et à un état d'alarme de chaque chemin candidat compris dans les informations de chemin candidat.

7. Noeud qui détecte un défaut (100), comprenant :
une unité de commutation (1001), configurée pour effectuer une commutation de chemin de réception sélectif ;
une unité de génération (1002), configurée pour et générer des informations de chemin candidat conformément à un chemin de direction de réception sélectif du noeud (100) après la commutation de chemin de direction de réception sélectif, où les informations de chemin candidat comprennent des informations concernant au moins un chemin différent du chemin de fonctionnement et du chemin de protection entre un noeud source et le noeud (100) parmi les chemins allant du noeud source au noeud (100), où le chemin est compatible avec le chemin de direction de réception sélectif du noeud (100) ;
une unité d'envoi (1003), configurée pour envoyer les informations de chemin candidat au noeud source, de manière à ce que le noeud source acquière un premier chemin conformément aux informations de chemin candidat et commute un service vers un canal de données correspondant au premier chemin, où l'acquisition, par le noeud source, d'un premier chemin conformément aux informations de chemin candidat, comprend les étapes suivantes :
utiliser, par le noeud source, un chemin candidat dans un état de non-fonctionnement et dans un état de non-alarme dans les informations de chemin candidat et conformément à un délai de réseau comme premier chemin conformément à un état de fonctionnement et à un état d'alarme de chaque chemin candidat compris dans les informations de chemin candidat, et le noeud source envoie, sur le premier chemin, des informations concernant le premier chemin à un noeud collecteur de manière à ce qu'un noeud intermédiaire capable d'une protection de type 1+1 sur le premier chemin détermine, conformément aux informations concernant le premier chemin, de commuter le service vers le canal de données correspondant au premier chemin, où le premier chemin est un chemin entre le noeud source et le noeud collecteur, et les informations concernant le premier chemin comprennent des informations indiquant que le premier chemin est un chemin commuté, et un objet dans un message RSVP-TE, Resource Reservation Protocol - Traffic Engineering, indique que le premier chemin est un chemin commuté ; et
une unité de détermination de réception (1004), configurée pour déterminer, conformément aux informations reçues concernant le premier chemin, de commuter le service vers le canal de données correspondant au premier chemin.

8. Noeud (100) selon la revendication 7, dans lequel l'unité d'envoi (1004) est configurée pour envoyer les informations de chemin candidat au noeud source au moyen d'un routage.

9. Noeud intermédiaire (110) comprenant :
une unité de réception (1101), configurée pour recevoir des informations concernant un premier chemin, où les informations concernant le premier chemin sont des informations envoyées par un noeud source, sur le premier chemin, à un noeud collecteur, où le premier chemin est un chemin dans un état de non-fonctionnement et dans un état de non-alarme et est acquis par le noeud source conformément à un état de fonctionnement et à un état d'alarme et conformément à un délai de réseau de chaque chemin candidat compris dans les informations de chemin candidat, et comprend des informations indiquant que le premier chemin est un chemin commuté et un objet dans un message RSVP-TE, Resource Reservation Protocol - Traffic Engineering, indique que le premier chemin est un chemin commuté, le noeud (110) est un noeud capable d'une protection de type 1+1 sur le premier chemin, et le premier chemin est un chemin entre le noeud source et le noeud collecteur ;
une unité de détermination (1102), configurée pour déterminer, conformément aux informations concernant le premier chemin, de commuter un service vers le premier chemin ; et
une unité d'envoi (1103), configurée pour retransmettre, sur le premier chemin, les informations concernant le premier chemin vers un noeud en aval, de manière à ce qu'un noeud en aval capable d'une protection de type 1+1 détermine, conformément aux informations concernant le premier chemin, de commuter le service vers un canal de données correspondant au premier chemin.

10. Noeud (110) selon la revendication 9, dans lequel l'unité de détermination (1102) est spécifiquement configurée pour :
si une protection de type 1+1 existe sur le noeud (110), déterminer si un canal de données sélectif actuel est compatible avec le canal de données correspondant au premier chemin et est indiqué dans les informations concernant le premier chemin ;
s'il est compatible, déterminer que le noeud (110) n'effectue pas de commutation ;
s'il n'est pas compatible, commuter le service vers le canal de données correspondant au premier chemin.

11. Système de commutation bidirectionnelle de bout en bout de type 1+1, dans lequel le système comprend le noeud source selon la revendication 6, le noeud qui détecte un défaut selon la revendication 7 ou la revendication 8, et au moins un noeud intermédiaire selon la revendication 9 ou la revendication 10.
